# EUROPEAN PATENT SPECIFICATION

(11) **EP 1 789 268 B1**
(45) Date of publication and mention of the grant of the patent: **10.03.2010**
(21) Application number: 05774781.8
(22) Date of filing: 25.08.2005
(51) Int. Cl.: B60G 3/14, B60G 7/02, B60G 11/46, B60G 21/055

(54) **WHEEL SUSPENSION**
RADAUFHÄNGUNG
SUSPENSION DE VEHICULE

(30) Priority: 31.08.2004 SE 0402104
(43) Date of publication of application: 30.05.2007
(73) Proprietor: VOLVO LASTVAGNAR AB, 405 08 Göteborg (SE)
(72) Inventor: LUNDMARK, Andreas, S-414 67 Göteborg (SE)
(74) Representative: Fröhling, Werner Otto
(86) International application number: PCT/SE2005/001246
(87) International publication number: WO 2006/025780

(56) References cited:
- EP-A- 0 464 415
- EP-A- 0 806 310
- EP-A1- 0 464 415
- WO-A-97/12770
- WO-A1-03/103998
- US-A- 2 202 665
- US-A- 5 409 254
- US-A1- 2002 117 829
- US-A1- 2002 117 829
- US-B1- 6 685 203

## Description

### TECHNICAL FIELD

The invention relates to an individual wheel suspension for vehicles, especially for vehicles built on a traditional truck frame having longitudinal beams. Such a wheel suspension according to the preamble of claim 1 is known from US-A-2 202 665.

### BACKGROUND

Individual wheel suspensions, especially front wheel suspensions, for vehicles built on a frame consisting of a pair of longitudinal beams having a U-profile or I-profile are normally of the McPherson type or comprise double link arms. Such solutions are generally difficult to install owing to the limited space which is available. This is especially problematic for front wheel suspensions, in which the space is severely limited by the placement of the engine between the longitudinal frames. An alternative is to move the engine, which is often the case in buses, where the engine has been placed right at the back.

Examples of different types of known individual wheel suspensions can be seen from DE-A1-2918605, DE-A1-4412145, DE-A1-19515565 and US-A-4033605.

A further problem with current wheel suspensions is that they limit the possible ground clearance and the choice of engine placement. It is desirable to be able to adjust the chassis height above ground level relatively freely, while, at the same time, the engine should be placed as low as possible in order to obtain a low centre of gravity and a plane floor in the driver's cab. These requirements are difficult to combine with current solutions, which comprise spring-mounted, rigid axles extending beneath the frame and the engine.

One wheel suspension which to some extent solves the abovementioned problems is known by virtue of SE-A1-9903731, in which the particular wheel suspension is fastened in an auxiliary frame mounted around a pair of longitudinal beams. The drawbacks with this solution are that it is complicated, owing to all the extra rods needed to absorb forces in the longitudinal direction and to transmit steering motions, and owing to the fact that the auxiliary frame requires a lot of space.

In addition thereto, DE-A1-4021096 shows a relatively compact wheel suspension offering good ground clearance. This solution is not, however, applicable to steerable front wheel suspensions and cannot absorb any substantial forces in the lateral direction.

The solution according to the invention produces an improved wheel suspension which combines low weight, relatively long spring travel and a built-in stabilizer. The invention also allows a low engine placement in order to obtain a low centre of gravity.

### SUMMARY OF THE INVENTION

The abovementioned problems are solved with the aid of an individual wheel suspension as claimed in patent claim 1. The patent claims also embrace a vehicle provided with said wheel suspension, as claimed in claim 17.

In the following text, for simplification purposes, only one wheel suspension, situated on one side of the vehicle, will be described, unless otherwise specified. The invention is preferably, but not necessarily, intended for frame-built vehicles comprising a pair of longitudinal beams. Directional indications in the text, such as in front of, behind, inner, outer and transverse, refer to directions in relation to the central longitudinal axis of the vehicle and its principal direction of travel, unless otherwise specified.

According to a first embodiment, the invention relates to a wheel suspension for the suspension of a wheel in a motor vehicle, comprising a wheel spindle connected to a steering knuckle holder, a link arm connecting the steering knuckle holder to the vehicle, and a stabilizer fastened transversely to the longitudinal axis of the vehicle. The link arm is fastened in a rotationally fixed manner to an outer end of the stabilizer, and is fastened in a rotationally fixed manner in at least one position axially removed from the outer end of the stabilizer.

The link arm has preferably, but not necessarily, a substantially Y-shaped section, regarded in plan view. In this case, the link arm is rotatably attached to the vehicle at a first pivot point on the end of the upright of the Y-shaped section, and rotatably attached to the vehicle at a second pivot point adjacent to the inner one of the branches of the Y-shaped section.

In this way, the link arm is arranged so as to be rotatable about an axis between said first and second pivot points, which axis is substantially parallel with the longitudinal axis of the vehicle. Depending on the exact placement of said pivot points, the rotation axis of the link arm can be parallel with the longitudinal axis of the vehicle and/or a longitudinal beam belonging to the vehicle frame and situated above the respective link arm. Said first pivot point is preferably, but not necessarily, situated in front of said second pivot point in the longitudinal axis of the vehicle.

According to a preferred embodiment, the stabilizer is constituted by a leaf spring. The stabilizer can be constituted by a leaf spring of constant or variable, substantially rectangular cross section along its longitudinal axis. The leaf spring can be made of a suitable metal, e.g. steel, a composite, e.g. a fibre-reinforced plastic, or a combination of metal and composite.

A stabilizer of this type can, on the one hand, absorb vertical forces in connection with the spring motion of the wheels relative to the vehicle frame and, on the other hand, counteract the rotary forces which are generated, for example, when the vehicle is braked. When the leaf spring is subjected to load in the vertical direction, a certain longitudinal transformation of the leaf spring occurs relative to its inner and outer attachment points to the respective link arm, as well as between the attachment points for the link arms on the respective side. The inner and outer attachment points of the respective link arms to the stabilizer are preferably constituted by a joint which is elastic in the longitudinal direction of the leaf spring, which joint allows a certain movement between the components. Such a joint can be constituted by an elastically deformable material, such as rubber.

According to a further embodiment, the outer one of the branches of the Y-shaped section extends a short distance beyond the outer end of the stabilizer in a direction running transversely to the longitudinal axis of the vehicle. This outer branch of the link arm can thus be provided with a hinged attachment point for a lower part of the wheel spindle. An upper part of the wheel spindle is articulately attached to the vehicle or the vehicle frame. This upper attachment point preferably comprises a substantially U-shaped link arm, the side members of which are articulately attached to the vehicle and the outer part of which is articulately attached in the upper part of the steering knuckle. In addition, the wheel spindles on each side of the vehicle are mechanically connected by a system of steering rods.

The link arm can be provided with at least one spring suspension device adjacent to the outer attachment point of the stabilizer. The spring suspension device can preferably be controllably adjustable in the vertical direction and at least comprises an air bellows placed between the link arm and the underside of the vehicle. According to a further embodiment, the spring suspension device comprises a telescopic damper placed between the link arm and a fastening point on the vehicle. The air bellows and the telescopic damper are preferably, but not necessarily, placed substantially coaxially. A spring suspension device comprising an air bellows and/or a telescopic damper can be mounted between a point adjacent to the outer fastening point of the stabilizer and a fastening point mounted on the outer side of the vehicle frame. The spring suspension device can in this case run between the side members of the U-shaped upper link arm of the wheel spindle.

The invention also comprises a vehicle provided with a wheel suspension according to the description above. The wheel suspension of the vehicle thus comprises a wheel spindle connected to a steering knuckle holder, a link arm connecting the steering knuckle holder to the vehicle, and a stabilizer fastened transversely to the longitudinal axis of the vehicle. Said link arm is fastened in a rotationally fixed manner at an outer end of the stabilizer and fastened in a rotationally fixed manner in at least one position axially removed from the outer end of the stabilizer. The stabilizer is preferably constituted by a leaf spring.

### DESCRIPTION OF THE FIGURES

The embodiments specified in the description will be described with reference to the appended schematic figures of the drawing, wherein
- figure 1: shows a perspective view of the wheel suspension, viewed obliquely from the front and above;
- figure 2: shows a perspective view of the wheel suspension, viewed obliquely from the front and below;
- figure 3: shows a perspective view of a part of the wheel suspension;
- figure 4A-4D: shows the working of the wheel suspension in different load situations.

### DESCRIPTION OF EMBODIMENTS

The preferred embodiments, which will be described with reference to the figures of the drawing, are intended to be applied to a vehicle frame in the form of two longitudinal U-beams or I-beams, in which the engine is mounted between the beams. In the following text, the construction of the individual wheel suspension for one side of the vehicle is described, unless otherwise specified.

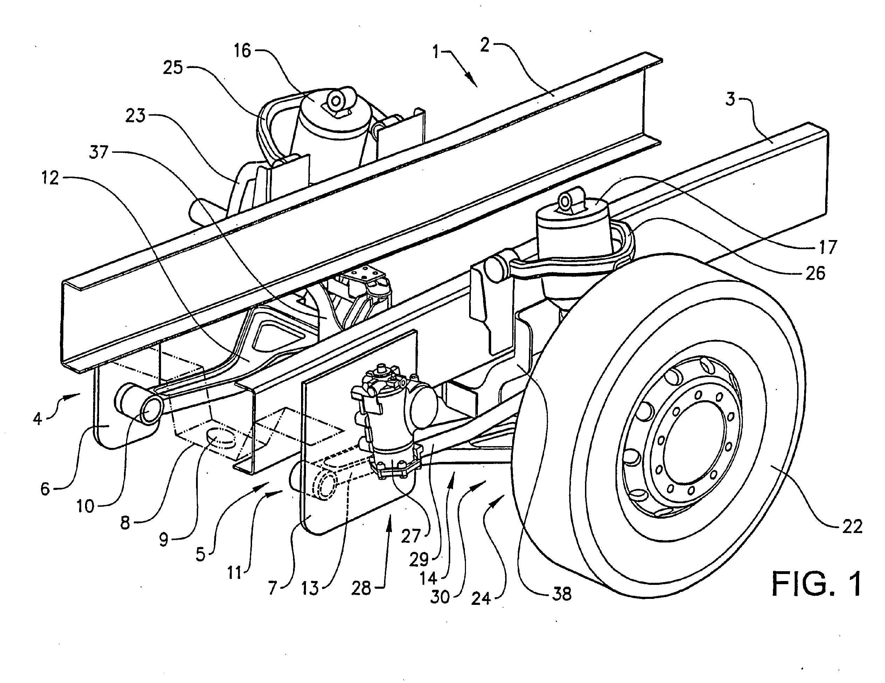

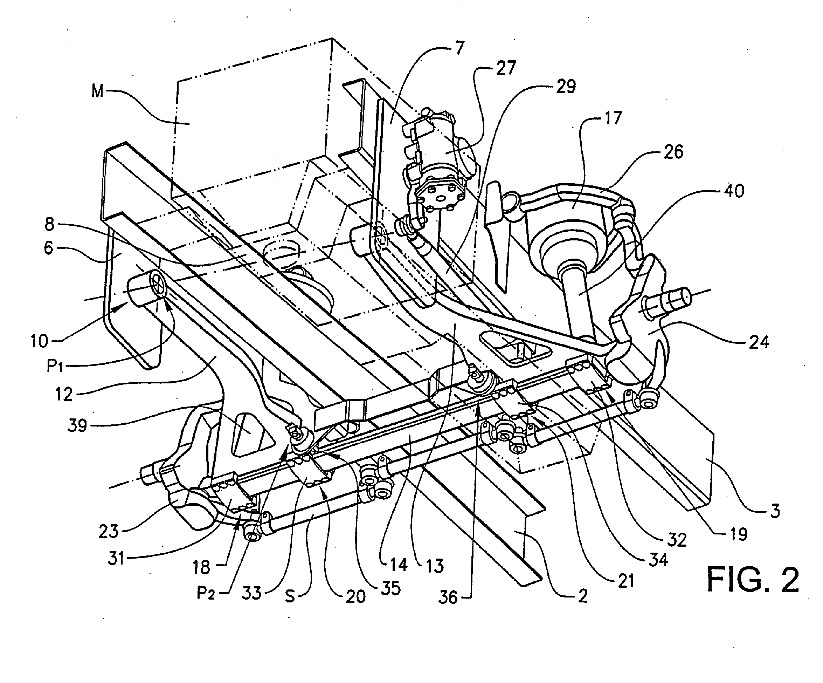

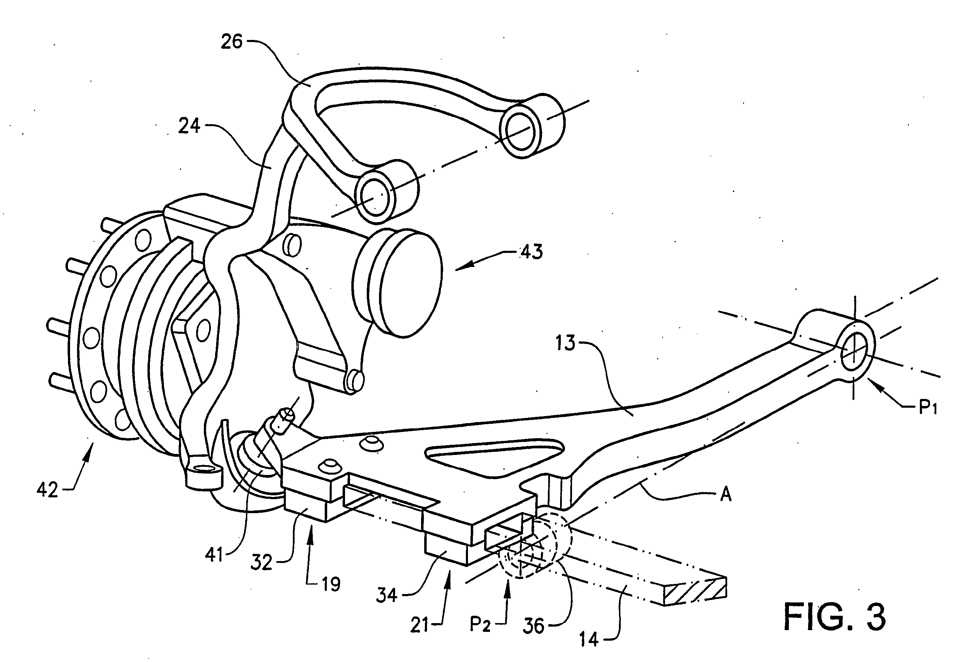

Figures 1 and 2 show a front wheel suspension according to the invention viewed in perspective view obliquely from the front and above, and obliquely from the front and below, respectively. The front wheel suspension in this example is intended for a vehicle built on a frame 1 consisting of a pair of longitudinal beams 2, 3. In their front parts, the beams have a pair of brackets 4, 5, which comprise a plate 6, 7 extending down beneath the bottom face of the frame beams. These plates 6, 7 constitute attachments for a transverse beam 8 connecting the longitudinal beams 2, 3. The transverse beam 8 is also provided with an engine attachment 9 on a central, depressed section on its top side. This attachment is not part of the invention and will not be described in detail. At their lower ends, the plates 6, 7 are provided with attachments in the form of holders 10, 11 for a pair of substantially longitudinal link arms 12, 13. Each holder is preferably constituted by a shaft fixed to and disposed essentially at right angle to the respective plate 6, 7. The shaft is provided with a cylindrical rubber bushing, which interacts with a corresponding recess in the front end of the respective link arm 12, 13. These holders 10, 11 constitute a first pivot point P₁ (see figure 2) for the respective link arm 12, 13 and allow, on the one hand, rotation of the link arm about the axis of the rubber bushing and, on the other hand, rotation about a second axis which intersects the axis of the rubber bushing substantially parallel with the longitudinal axis of the vehicle. Said second axis passes through said first pivot point P₁, and a second pivot point described in connection with figure 2 below. Said second axis is denoted by A in figure 3.

The link arms 12, 13 have a substantially Y-shaped profile viewed in a plan view. The end of the respective link arm, corresponding to the upright of the Y-shaped link arm, is fixed in the holders 10, 11 of the plates 6, 7. The link arms 12, 13 extend rearward in the longitudinal axis of the vehicle and are fastened at their rear ends, on the one hand, in a stabilizer 14 (see figure 2) and, on the other hand, in a spring suspension device in the form of an air bellows 16, 17. The upper part of the air bellows 16, 17 is fastened to the respective longitudinal beam 2, 3. In order to obtain the longest possible spring travel, the air bellows is placed as far back relative to the link arm as the construction allows. The stabilizer is mounted on outer attachments 31, 32 and inner attachments 33, 34 placed at the ends of the rear-facing outer and inner branches, respectively, of the Y-shaped link arm. The figure also shows a wheel 22, which is mounted on a wheel spindle holder by means of a wheel spindle 24 (see figure 2). The lower part of the wheel spindle 23, 24 is articulately attached to the wheel spindle holder on an outer part of the outer branch of the Y-shaped link arm 12, 13, while its upper part is articulately attached to a U-shaped link arm 25, 26. The upper, U-shaped link arm 25, 26 is placed around the air bellows 16, 17 and its side members are articulately attached to the vehicle frame 2, 3. The wheel 22 is steered by the action of a steering gear 27, mounted on the bracket 5 for the link arm 13, upon a pitman arm 28, which, in turn, acts upon a steering rod 29 connected to a lever 30 on the wheel spindle 24. The wheel spindles 23, 24 on each side of the vehicle are mechanically connected by a system of further steering rods. A steering linkage of this type constitutes a commonly known technology and will not be described in detail.

Figure 2 shows a perspective view of the wheel suspension, viewed obliquely from the front and below. Figure 2 shows the extent of the link arms 12, 13 rearward in the longitudinal axis of the vehicle, and how the rear ends thereof are fastened in a stabilizer 14 in the form of a transverse leaf spring. The figure also shows the placement of the vehicle engine partially sunken beneath the link arms, the lower part M of the engine having been indicated with dashed lines. The respective link arm 12, 13 is fastened in a rotationally fixed manner both by a first fixture 31, 32 to the outer end 18, 19 of the leaf spring 14 and by a second fixture 33, 34 to a position 20, 21 axially removed from the outer end of the leaf spring, viewed in the longitudinal direction of the leaf spring. These first and second fixtures 31, 32; 33, 34 preferably comprise bushings of an elastically resilient material, so as to allow a certain longitudinal displacement of the leaf spring when this is deformed.

As has been described in connection with figure 1, the front part of the link arm 12, 13 is rotatably attached to the vehicle at a first pivot point P₁ on the end of the upright of the Y-shaped link arm. The link arm 12, 13 is additionally rotatably attached to the vehicle in a second holder 35, 36, which is fixed to the vehicle frame 2, 3 by a bracket 37, 38 (see figure 1). The brackets 37, 38 on opposite sides of the vehicle can also be supported with the aid of a transverse plate which runs beneath the respective frame 2, 3 transversely to the longitudinal direction of the vehicle. The plate is preferably placed edgeways relative to the horizontal plane and can also be bent to be given greater rigidity. Said second holders 35, 36 constitute a second pivot point P₂ (only one shown) adjacent to the inner one of the rear-facing branches of the Y-shaped link arm. The second pivot point P₂ is placed in a substantially cylindrical rubber bushing having a central axis substantially parallel with the longitudinal axis of the vehicle. The second holder 35, 36 is arranged so as to enclose the rubber bushing and comprises a first part (not shown) fixed to the link arm 12, 13 and a second part fixed to the bracket 37, 38. The link arm 12, 13 is rotatable about an axis A (see figure 3) passing through said first and second pivot points P₁, P₂. The axis A can preferably, but not necessarily, coincide with the axis through the rubber bushing of the second holder 35, 36. Figure 2 also indicates a steering linkage S connecting the two wheel spindles 23, 24 on each side of the vehicle. The steering linkage S can be manoeuvred with the aid of the steering gear 27 and the steering rod 29. Alternatively, the vehicle can be provided with one steering gear per side, which steers the respective wheel spindle individually.

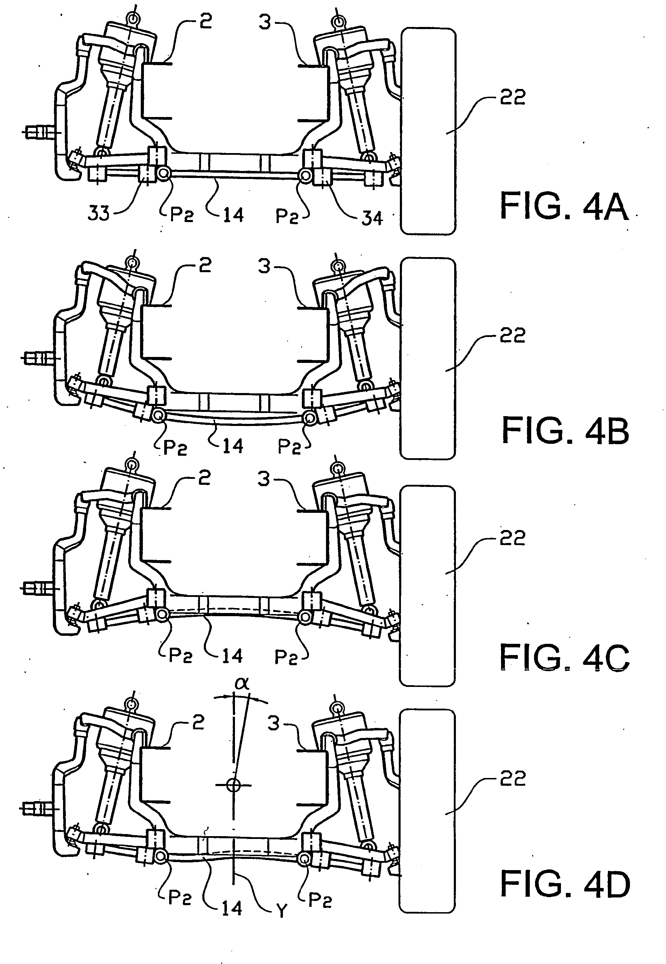

This mounting of the respective link arm 12, 13 on the frame 2, 3 of the vehicle and on the leaf spring 14 allows the link arm to be rotatable about said axis A during deformation of the leaf spring in connection with the vertical motion of the wheels. Disregarding the limited motions which are enabled by compression of the various rubber bushings in the holders of the link arms, the leaf spring 14 can be deemed to be rotatably attached relative to the vehicle frame about the axis A through the respective second holders 35, 36. The vertical motion of the wheels is thus dampened, on the one hand, by the leaf spring 14 and, on the other hand, by a spring suspension device comprising the air bellows 16, 17 and a pair of coaxially mounted telescopic shock absorbers 39, 40. The lower part of the respective shock absorber 39, 40 is articulately attached, adjacent to said first fixture 31, 32, to the outer end 18, 19 of the leaf spring 14. The telescopic shock absorbers are preferably of the hydraulic type, but can also be of the pneumatic type or be constituted by an active, controllable damper. The function of the wheel suspension will be described in greater detail in connection with figures 4A-4D below.

Figure 3 shows a perspective view of a part of the wheel suspension on the left-hand side of the vehicle, viewed obliquely from the top and rear. Figure 3 shows the link arm 13, with the front end, intended to be mounted on the front holder 11, with its first pivot point P₁ and with the rear end, intended to be mounted on the second, rear holder 36, with its inner, second pivot point P₂. The link arm 13 is rotatable about an axis A passing through the first and second pivot points P₁, P₂. The pivot points P₁, P₂ and the axis A are placed equivalently for the second link arm 12 at the opposite end of the leaf spring 14. The lower part of the wheel spindle 24 is articulately attached to a wheel spindle holder 41 on an outer part of the outer branch of the Y-shaped link arm 13, while its upper part is articulately attached to a U-shaped link arm 26. The upper, U-shaped link arm 26 is placed around the air bellows 16 (see figure 1) and its side members are articulately attached to brackets on the vehicle frame. The figure also shows a wheel holder 42 and a brake calliper 43 mounted on the wheel spindle.

Figure 4A-4D shows the function of the wheel suspension in a few different load situations. As has been specified above, the leaf spring acts, on the one hand, as a stabilizer, for example during braking or if the vehicle rolls in the lateral direction and, on the other hand, as a spring for the absorption of vertical load. Figures 4A-4D show a simplified view of the embodiment according to figure 1 viewed from the front.

Figure 4A shows the leaf spring in its normal, unloaded state. In order to prevent the central section of the spring from being bent down in this state, the leaf spring can be biased such that it assumes a substantially horizontal position when subjected to the weight of an unladen vehicle. Figure 4B shows how the outer sections of the leaf spring are bent upward and its central section is bent downward relative to a substantially horizontal normal position. This position is assumed when the vehicle is laden, or in the event of a spring-down motion during travel. The figure shows the embodiment in question in its maximally sprung-down position, the second pivot point P₂ lying about 90 mm below its normal position. Figure 4C shows how the outer sections of the leaf spring are bent downward and its central section is bent upward relative to a substantially horizontal normal position. This position is assumed immediately after a spring-down motion during travel and is thereafter dampened with the aid of the air bellows and telescopic damper of the spring device. The figure shows the embodiment in question in its maximally upper sprung position, the second pivot point P₂ lying about 160 mm above its normal position. Figure 4D shows how the outer sections of the leaf spring bend upward on one side and downward on the opposite side in connection with a rolling motion in the lateral direction. The figure shows the embodiment in question in a position in which the vehicle rolls to the left in the direction of travel about its roll centre R, with a roll angle a of about 3° from an original vertical plane Y. This is not, however, the maximum roll angle of the vehicle. If the bending of the outer sections is substantially symmetrical, the central section will assume a slight sinusoidal or S-shaped curvature. The leaf spring will thereby prevent the outer sections from bulging and will provide a stabilizing effect.

The invention is not limited to the embodiments above, but can be modified within the scope of the following patent claims.

## Claims

1. A wheel suspension for the suspension of a wheel in a motor vehicle, comprising a wheel spindle (23, 24) connected to a steering knuckle holder (41), a link arm (12, 13) connecting the steering knuckle holder to the vehicle, and a stabilizer (14) fastened transversely to the longitudinal axis of the vehicle, the link arm (12, 13) being attached in a rotationally fixed manner to an outer end (18, 19) of the stabilizer (14), **characterized in that** the link arm (12, 13) is attached in a rotationally fixed manner in at least one position (20, 21) on the stabilizer axially removed from the outer end of the stabilizer.

2. The wheel suspension as claimed in claim 1, **characterized in that** the link arm (12, 13) has a substantially Y-shape.

3. The wheel suspension as claimed in claim 2, **characterized in that** the link arm (12, 13) is rotatably attached to the vehicle at a first pivot point (P₁) on the end of the upright of the Y-shaped link arm.

4. The wheel suspension as claimed in claim 3, **characterized in that** the link arm (12, 13) is rotatably attached to the vehicle at a second pivot point (P₂) adjacent to the inner one of the branches of the Y-shaped link arm.

5. The wheel suspension as claimed in claim 4, **characterized in that** the link arm (12, 13) is arranged so as to be rotatable about an axis (A) between said first and second pivot points (P₁, P₂), which axis is substantially parallel with the longitudinal axis of the vehicle.

6. The wheel suspension as claimed in claim 4 or 5, **characterized in that** said first pivot point (P₁) is situated in front of said second pivot point (P₂) in the longitudinal axis of the vehicle.

7. The wheel suspension as claimed in any one of claim 1 to 6, **characterized in that** the stabilizer (14) is constituted by a leaf spring.

8. The wheel suspension as claimed in any one of claim 1 to 7, **characterized in that** the stabilizer (14) has a constant cross section along its longitudinal axis.

9. The wheel suspension as claimed in any one of claim 1 to 7, **characterized in that** the stabilizer (14) has a variable cross section along its longitudinal axis.

10. The wheel suspension as claimed in any one of claim 1 to 9, **characterized in that** the attachment between the link arm (12, 13) and the outer end (18, 19) of the stabilizer (14) is constituted by at least one joint (31, 32) which is elastic in the longitudinal direction of the stabilizer.

11. The wheel suspension as claimed in any one of claim 2 to 10, **characterized in that** a lower part of the wheel spindle (23, 24) is connected to the outer branch of the Y-shaped link arm.

12. The wheel suspension as claimed in any one of claim 1 to 11, **characterized in that** the link arm (12, 13) is provided with at least one spring suspension device (16, 17; 39, 40) adjacent to the outer end (18, 19) of the stabilizer (14).

13. The wheel suspension as claimed in claim 12, **characterized in that** the spring suspension device (16, 17; 39, 40) is controllably adjustable in the vertical direction.

14. The wheel suspension as claimed in claim 12 or 13, **characterized in that** the spring suspension device at least comprises an air bellows (16, 17) placed between the link arm (12, 13) and a fastening point on the vehicle.

15. The wheel suspension as claimed in any one of claims 12 to 14, **characterized in that** the spring suspension device comprises a telescopic damper (39, 40) placed between the link arm (12, 13) and an attachment point on the vehicle.

16. The wheel suspension as claimed in claim 15, **characterized in that** the air bellows (16, 17) and the telescopic damper (39, 40) are placed substantially coaxially.

17. A vehicle **characterized in that** the vehicle comprises a wheel suspension as claimed in any one of claims 1 to 16.

18. The vehicle as claimed in claim 17, **characterized in that** the vehicle comprises two wheel suspensions positioned on one side each of the vehicle, the wheel spindles (23, 24) being mechanically connected by a system of steering rods.

## Patentansprüche

1. Radaufhängung zur Aufhängung eines Rades in einem Kraftfahrzeug, mit einer Radachse (23, 24), die mit einem Achsschenkelhalter (41) verbunden ist, einem Gelenkarm (12, 13), der den Achsschenkelhalter mit dem Fahrzeug verbindet, und einem Stabilisator (14), der quer zur Längsachse des Fahrzeugs befestigt ist, wobei der Gelenkarm (12, 13) drehfest an einem äußeren Ende (18, 19) des Stabilisators (14) angebracht ist, **dadurch gekennzeichnet, dass** der Gelenkarm (12, 13) in wenigstens einer Position (20, 21) an dem Stabilisator axial entfernt von dem äußerem Ende des Stabilisators drehfest angebracht ist.

2. Radaufhängung nach Anspruch 1, **dadurch gekennzeichnet, dass** der Gelenkarm (12, 13) im Wesentlichen Y-förmig ist.

3. Radaufhängung nach Anspruch 2, **dadurch gekennzeichnet, dass** der Gelenkarm (12, 13) an einem ersten Schwenkpunkt (P₁) an dem Ende des Ständers des Y-förmigen Gelenkarms drehbar an dem Fahrzeug angebracht ist.

4. Radaufhängung nach Anspruch 3, **dadurch gekennzeichnet, dass** der Gelenkarm (12, 13) an einem zweiten Schwenkpunkt (P₂) angrenzend an den inneren der Zweige des Y-förmigen Gelenkarms an dem Fahrzeug drehbar angebracht ist.

5. Radaufhängung nach Anspruch 4, **dadurch gekennzeichnet, dass** der Gelenkarm (12, 13) so angeordnet ist, dass er um eine Achse (A) zwischen dem ersten und zweiten Schwenkpunkt (P₁, P₂) drehbar ist, wobei die Achse im Wesentlichen parallel zur Längsachse des Fahrzeugs verläuft.

6. Radaufhängung nach Anspruch 4 oder 5, **dadurch gekennzeichnet, dass** der erste Schwenkpunkt (P₁) vor dem zweiten Schwenkpunkt (P₂) in der Längsachse des Fahrzeugs liegt.

7. Radaufhängung nach einem der Ansprüche 1 bis 6, **dadurch gekennzeichnet, dass** der Stabilisator (14) von einer Blattfeder gebildet wird.

8. Radaufhängung nach einem der Ansprüche 1 bis 7, **dadurch gekennzeichnet, dass** der Stabilisator (14) entlang seiner Längsachse einen konstanten Querschnitt aufweist.

9. Radaufhängung nach einem der Ansprüche 1 bis 7, **dadurch gekennzeichnet, dass** der Stabilisator (14) entlang seiner Längsachse einen variablen Querschnitt aufweist.

10. Radaufhängung nach einem der Ansprüche 1 bis 9, **dadurch gekennzeichnet, dass** die Befestigung zwischen dem Gelenkarm (12, 13) und dem äußeren Ende (18, 19) des Stabilisators (14) von wenigstens einem Gelenk (31, 32) gebildet wird, das in Längsrichtung des Stabilisators elastisch ist.

11. Radaufhängung nach einem der Ansprüche 2 bis 10, **dadurch gekennzeichnet, dass** ein unterer Abschnitt der Radachse (23, 24) mit dem äußeren Zweig des Y-förmigen Gelenkarms verbunden ist.

12. Radaufhängung nach einem der Ansprüche 1 bis 11, **dadurch gekennzeichnet, dass** der Gelenkarm (12, 13) mit wenigstens einer Federaufhängungsvorrichtung (16, 17; 39, 40) versehen ist, die an das äußere Ende (18, 19) des Stabilisators (14) angrenzt.

13. Radaufhängung nach Anspruch 12, **dadurch gekennzeichnet, dass** die Radaufhängungsvorrichtung (16, 17; 39, 40) in Vertikalrichtung steuerbar einstellbar ist.

14. Radaufhängung nach Anspruch 12 oder 13, **dadurch gekennzeichnet, dass** die Federaufhängungsvorrichtung wenigstens einen Luftbalg (16, 17) umfasst, der zwischen dem Gelenkarm (12, 13) und dem Befestigungspunkt an dem Fahrzeug angeordnet ist.

15. Radaufhängung nach einem der Ansprüche 12 bis 14, **dadurch gekennzeichnet, dass** die Federaufhängungsvorrichtung einen Teleskopdämpfer (39, 40) umfasst, der zwischen dem Gelenkarm (12, 13) und einem Befestigungspunkt an dem Fahrzeug angeordnet ist.

16. Radaufhängung nach Anspruch 15, **dadurch gekennzeichnet, dass** der Luftbalg (16, 17) und der Teleskopdämpfer (39, 40) im Wesentlichen koaxial angeordnet sind.

17. Fahrzeug, **dadurch gekennzeichnet, dass** das Fahrzeug eine Radaufhängung nach einem der Ansprüche 1 bis 16 umfasst.

18. Fahrzeug nach Anspruch 17, **dadurch gekennzeichnet, dass** das Fahrzeug zwei Radaufhängungen umfasst, die jeweils auf einer Seite des Fahrzeugs angeordnet sind, wobei die Radachsen (23, 24) mechanisch mit einem System von Lenkstangen verbunden sind.

## Revendications

1. Suspension de roue pour la suspension d'une roue d'un véhicule motorisé, comprenant une fusée de roue (23, 24) reliée à un support de rotule de direction (41), un bras de liaison (12, 13) reliant le support de rotule de direction au véhicule, et un stabilisateur (14) fixé transversalement à l'axe longitudinal du véhicule, le bras de liaison (12, 13) étant fixé de manière rotative sur une extrémité extérieure (18, 19) du stabilisateur (14), **caractérisé en ce que** le bras de liaison (12, 13) est fixé de manière rotative dans au moins une position (20, 21) sur le stabilisateur décalé axialement par rapport à l'extrémité extérieure du stabilisateur.

2. Suspension de roue selon la revendication 1, **caractérisée en ce que** le bras de liaison (12, 13) a essentiellement une forme de Y.

3. Suspension de roue selon la revendication 2, **caractérisée en ce que** le bras de liaison (12, 13) est fixé rotatif au véhicule en un premier point de pivot (P₁) sur l'extrémité du montant du bras de liaison en forme de Y.

4. Suspension de roue selon la revendication 3, **caractérisée en ce que** le bras de liaison (12, 13) est fixé rotatif au véhicule en un second point de pivot (P₂) adjacent la plus intérieure des branches du bras de liaison en forme de Y.

5. Suspension de roue selon la revendication 4, **caractérisée en ce que** le bras de liaison (12, 13) est agencé de manière à pouvoir pivoter autour d'un axe (A) entre lesdits premier et second points de pivot (P₁, P₂), lequel axe étant essentiellement parallèle à l'axe longitudinal du véhicule.

6. Suspension de roue selon la revendication 4 ou 5, **caractérisée en ce que** ledit premier point de pivot (P₁) est situé en avant dudit second point de pivot (P₂) dans l'axe longitudinal du véhicule.

7. Suspension de roue selon l'une quelconque des revendications 1 à 6, **caractérisée en ce que** le stabilisateur (14) est constitué par un ressort à lame.

8. Suspension de roue selon l'une quelconque des revendications 1 à 7, **caractérisée en ce que** le stabilisateur (14) a une section transversale constante le long de son axe longitudinal.

9. Suspension de roue selon l'une quelconque des revendications 1 à 7, **caractérisée en ce que** le stabilisateur (14) a une section transversale variable le long de son axe longitudinal.

10. Suspension de roue selon l'une quelconque des revendications 1 à 9, **caractérisée en ce que** la liaison entre le bras de liaison (12, 13) et l'extrémité extérieure (18, 19) du stabilisateur (14) est constituée par au moins un joint (31, 32) qui est élastique dans la direction longitudinale du stabilisateur.

11. Suspension de roue selon l'une quelconque des revendications 2 à 10, **caractérisée en ce qu'**une partie inférieure de la fusée de roue (23, 24) est reliée à la branche extérieure de l'arbre de liaison en forme de Y.

12. Suspension de roue selon l'une quelconque des revendications 1 à 11, **caractérisée en ce que** le bras de liaison (12, 13) est fourni avec au moins un dispositif de suspension à ressort (16, 17 ; 39, 40) adjacent à l'extrémité extérieure (18, 19) du stabilisateur (14).

13. Suspension de roue selon la revendication 12, **caractérisée en ce que** le dispositif de suspension à ressort (16, 17 ; 39, 40) peut être réglé de manière contrôlée dans la direction verticale.

14. Suspension de roue selon la revendication 12 ou 13, **caractérisée en ce que** le dispositif de suspension à ressort comprend au moins des soufflets pneumatiques (16, 17) placés entre le bras de liaison (12, 13) et un point de fixation sur le véhicule.

15. Suspension de roue selon l'une quelconque des revendications 12 à 14, **caractérisée en ce que** le dispositif de suspension à ressort comprend un amortisseur télescopique (39, 40) placé entre le bras de liaison (12, 13) et un point de fixation sur le véhicule.

16. Suspension de roue selon la revendication 15, **caractérisée en ce que** les soufflets pneumatiques (16, 17) et l'amortisseur télescopique (39, 40) sont placés essentiellement de manière coaxiale.

17. Véhicule **caractérisé en ce que** le véhicule comprend une suspension de roue selon l'une quelconque des revendications 1 à 16.

18. Véhicule selon la revendication 17, **caractérisé en ce que** le véhicule comprend deux suspensions de roue positionnées chacune sur un côté du véhicule, les fusées de roue (23, 24) étant reliées mécaniquement par un système de bielles de direction.
